# EUROPÄISCHE PATENTANMELDUNG

(11) **EP 1 306 274 A1**
(43) Veröffentlichungstag der Anmeldung: **02.05.2003**
(21) Anmeldenummer: 02020865.8
(22) Anmeldetag: 18.09.2002
(51) Int. Cl.: B60R 22/02, B60R 22/26, B60R 22/34, B60N 2/36

(54) **Kraftfahrzeug mit einem Fahrzeugsitz**

(30) Priorität: 27.10.2001 DE 10153138
(71) Anmelder: Bayerische Motoren Werke Aktiengesellschaft, 80809 München (DE)
(72) Erfinder: Schmitt, Andreas, 85386 Eching (DE)

(57) **Zusammenfassung**

Kerngedanke der Erfindung ist es, dass das Gurtband (**5**) in der nach vorne umgeklappten Nichtgebrauchsstellung der Lehne (**3,4**) ebenfalls über die Vorderseite (**7**) und zumindest teilweise über die Oberseite (**8**) der Lehne (**3,4**) verläuft, und das Zurückklappen der Lehne (**3,4**) aus der Nichtgebrauchsstellung in die Gebrauchsstellung durch eine hinter der Lehne (**3,4**) angeordnete karosseriefeste Antriebseinheit (**13**) des Gurtbands (**5**) unterstützt wird oder automatisiert erfolgt.

## Beschreibung

Die Erfindung betrifft ein Kraffahrzeug mit einem Fahrzeugsitz, dessen Lehne aus einer Gebrauchsstellung in eine Nichtgebrauchsstellung nach vorne umgeklappt werden kann, gemäß des Oberbegriffs des Patentanspruchs 1.

Allgemein bekannt sind Fahrzeugsitze, deren Lehne aus einer Gebrauchsstellung in eine Nichtgebrauchsstellung nach vorne umgeklappt werden kann. Einem solchen Fahrzeugsitz ist meist ein Sicherheitsgurt zugeordnet, der an der Karosserie angebracht ist. Das Gurtband des Sicherheitsgurtes verläuft dabei üblicherweise im nicht angelegten Zustand in der Gebrauchsstellung der Lehne von einem Befestigungspunkt an der Karosserie über die Vorderseite und zumindest teilweise über die Oberseite der Lehne nach hinten.

Aus der DE 195 22 684 A1 ist ferner bekannt, dass das Gurtband in einem Sitzbereich oberhalb einer Schulter des Fahrzeuginsassen durch eine sitzfeste Führung durchgeführt ist, um bei einem Seitenaufprall eine gute Sicherung des Fahrzeuginsassen zu gewährleisten.

Aufgabe der Erfindung ist es, einen Fahrzeugsitz zu schaffen, der bequem aus der Nichtgebrauchsstellung in die Gebrauchsstellung übergeführt werden kann.

Diese Aufgabe wird durch die Merkmale des Patentanspruchs 1 gelöst.

Kerngedanke der Erfindung ist es, dass das Gurtband in der nach vorne umgeklappten Nichtgebrauchsstellung der Lehne ebenfalls über die Vorderseite und zumindest teilweise über die Oberseite der Lehne verläuft, und das Zurückklappen der Lehne aus der Nichtgebrauchsstellung in die Gebrauchsstellung durch eine hinter der Lehne angeordnete karosseriefeste Antriebseinheit des Gurtbands unterstützt wird oder automatisiert erfolgt. Aufgrund dieser Anordnung des Gurtbandes klappt die Lehne aus der Nichtgebrauchsstellung in die Gebrauchsstellung zurück, wenn an dem Gurtband hinter der Lehne angezogen wird, sodass der Abschnitt des Gurtbandes zwischen dem Befestigungspunkt an der Karosserie und der Antriebseinheit verkürzt. Dieses Anziehen des Gurtbandes kann von Hand mit Unterstützung durch die Antriebseinheit erfolgen. Die Antriebseinheit reduziert die dafür vom Nutzer erforderliche Kraft. Idealerweise ist dabei das Gurtband vom Raum hinter dem Fahrzeugsitz gut zugänglich. Alternativ dazu kann das Anziehen des Gurtbandes und damit das Zurückverlagern der Lehne in die Gebrauchsstellung auch ausschließlich durch die Antriebseinheit erfolgen.

Dies ist insbesondere bei Fahrzeugen mit nur zwei Seitentüren von Vorteil, da die Fahrzeugsitze im Fond schlecht zugänglich sind. Diese Fondsitze können nun aus der nach vorne umgeklappten Nichtgebrauchsstellung beispielsweise elektrisch vom Fahrersitz per Knopfdruck aus wieder in die Gebrauchslage verschwenkt werden. Auch von einem hinter den Fondsitzen angeordneten Kofferraum aus lassen sich durch ein Anziehen der Gurtbänder hinter den Sitzen unterstützt durch die Antriebseinheit die Sitze leicht wieder in die Gebrauchsstellung bringen, ohne dass die Fondsitze wie bei einem viertürigen Fahrzeug von der Seite her zugänglich sein müssen.

Die Antriebseinheit ist vorteilhafterweise ein angetriebener Aufrollautomat des Gurtbandes. Angetriebene Aufrollautomaten für Gurtbänder sind bereits allgemein bekannt. Der Aufrollautomat dient dabei neben seiner üblichen Funktion als Antriebseinheit. Dies ist eine besonders preiswerte und einfache Möglichkeit, eine derartige Antriebseinheit zu realisieren. Der Aufrollautomat wird dabei üblicherweise durch einen elektrischen Motor angetrieben. In einer günstigen Weiterbildung dient der angetriebene Aufrollautomat zugleich als aktiver Gurtbandstraffer. Dadurch wird das Gurtband permanent straff am Körper des Insassen gehalten. Dies gewährleistet, dass bei einem Unfall der Sicherheitsgurt seine Schutzfunktion optimal erfüllen kann.

Das Gurtband gleitet in den bisher beschriebenen Ausführungen immer über die Oberseite der Lehne. Dabei kommt es im Laufe der Zeit zu einer erhöhten Abnutzung des Lehnenpolsters, und auch das Gurtband kann Verschleißspuren zeigen. Zur Verminderung dieser Abnutzung ist das Gurtband günstigerweise zwischen Antriebseinheit und Vorderseite der Lehne über eine mit der Karosserie verbundene Umlenkrolle geführt. Dadurch liegt das Gurtband an weniger Stellen im oberen Bereich der Lehne auf und die Umlenkkraft durch die Richtungsänderung des Gurtbandes wird durch die Rolle statt durch die Oberseite der Lehne aufgenommen.

Im oberen Bereich der Lehne ist idealerweise eine Führung angebracht, die das Gurtband gegen ein seitliches Verlagern auf der Lehne sichert. Die Führung verhindert, dass das Gurtband seitlich von der Lehne rutschen kann. Denn dann könnte die Lehne durch ein Anziehen am Gurtband hinter der Lehne nicht mehr in die Gebrauchsstellung zurückverlagert werden. Außerdem stellt die Führung sicher, dass das Gurtband auch bei einem Seitenaufprall dem Insassen den bestmöglichen Schutz bietet ohne zu verrutschen.

Die Antriebseinheit kann in einer weiteren günstigen Ausgestaltung der Erfindung aus zwei angetriebenen Rollen bestehen, zwischen denen das Gurtband hindurchläuft. Dies ist eine besonders einfache alternative Ausführung der Antriebseinheit. Das Gurtband ist dabei zwischen den sich gegeneinander drehenden Rollen geklemmt, sodass es nicht auf den Rollen durchrutschen kann. Idealerweise ist der Abstand der beiden Rollen zueinander veränderbar, sodass das Gurtband auch festgeklemmt werden kann. Dadurch kann die Lehne in jeder nach vorne umgeklappten Nichtgebrauchsstellung fest gehalten werden. Die Lehne kann dann nicht weiter nach vorne umgeklappt werden.

In der Zeichnung ist ein Ausführungsbeispiel der Erfindung dargestellt, das im folgenden näher beschrieben wird. Es zeigen in schematischer Darstellungsweise:
- Fig. 1: eine perspektivische Ansicht einer geteilten Rücksitzbank mit einer erfindungsgemäßen Anordnung eines Sicherheitsgurtes und
- Fig. 2: eine schematische Seitenansicht eines der beiden Rücksitze von Fig. 1 dargestellt in der Gebrauchs- und der Nichtgebrauchsstellung.

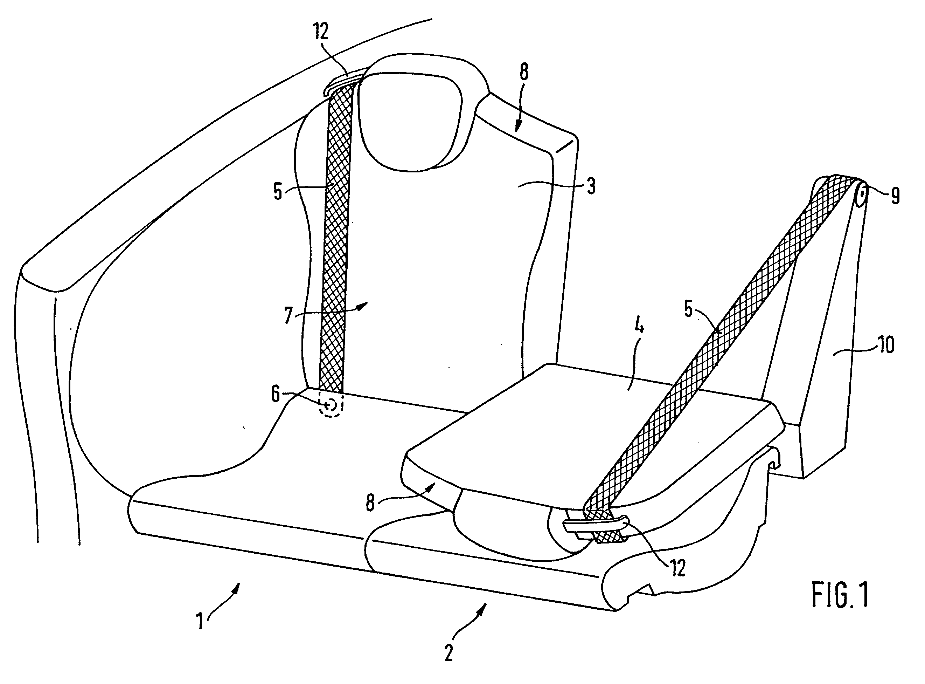

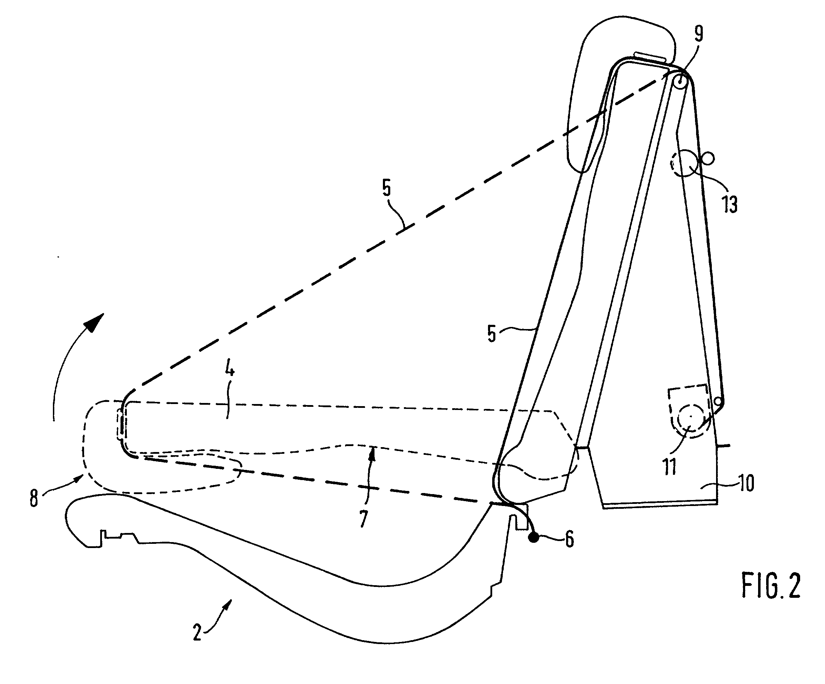

Fig. 1 zeigt eine geteilte Rücksitzbank mit einem linken und einem rechten Sitz 1 und 2 in einem Personenkraftwagen. Beim linken Sitz 1 befindet sich die Lehne 3 in der Gebrauchsstellung, beim rechten Sitz 2 ist die Lehne 4 nach vorne in die Nichtgebrauchsstellung umgeklappt. Bei beiden Sitzen 1 und 2 ist jeweils ein Gurtband 5 eines Sicherheitsgurtes angebracht, das von einem karosserieseitigen Befestigungspunkt 6 über die Vorderseite 7 und teilweise über die Oberseite 8 der Lehnen 3 und 4 verläuft. Hinter den Lehnen 3 und 4 läuft das Gurtband 5 über eine karosseriefeste Umlenkrolle 9 und hinter einer seitlich an der Fahrzeugkarosserie angebrachten Verkleidung 10 nach unten zu einem - im Schnitt in **Fig.** 2 gezeigten - mechanisch vorgespannten Aufrollautomaten 11. Auf der Oberseite 8 der Lehnen 3 und 4 ist jeweils ein Führungshaken 12 angebracht, der verhindert, dass das Gurtband 5 von der Oberseite 8 der Lehne 3 bzw. 4 seitlich herunterrutschen kann. Zwischen der Umlenkrolle 9 und dem Aufrollautomaten 11 ist das Gurtband 5 zwischen zwei sich gegeneinander drehenden, elektrisch angetriebenen Rollen 13 geklemmt.

Aus der in **Fig.** 2 gestrichelt gezeichneten nach vorne umgeklappten Nichtgebrauchsstellung der Lehne 4 lässt sich diese in die normal gezeichnete Gebrauchsstellung überführen, indem hinter der Lehne 4 am Gurtband 5 angezogen wird. Dazu müssen sich nur die beiden Rollen 13 gegeneinander in der richtigen Richtung drehen. Das Gurtband 5 wird dabei durch die beiden Rollen 13 nach unten gefördert und durch den Aufrollautomaten 11 aufgerollt. Der Abschnitt des Gurtbandes 5 zwischen dem Befestigungspunkt 6 und der Umlenkrolle 9 verkürzt sich und klappt dabei die Lehne 4 nach oben.

Die Rollen 13 können auch dazu dienen, das Gurtband 5 in einer bestimmten Position zu fixieren. Durch diese Fixierung kann die Lehne 4 in jeder Zwischenstellung zwischen der Nichtgebrauchsstellung und der Gebrauchsstellung daran gehindert werden, weiter nach vorne umzuklappen. Im Falle eines Unfalls wird so auch ein ungewolltes, weiteres nach vorne Umklappen verhindert. Die Lehne 4 kann dabei zugleich als Schutz vor Ladung von hinten dienen.

## Patentansprüche

1. Kraftfahrzeug mit einem Fahrzeugsitz, dessen Lehne aus einer Gebrauchsstellung in eine Nichtgebrauchsstellung nach vorne umgeklappt werden kann, und mit einem an der Karosserie des Kraftfahrzeugs angebrachten Sicherheitsgurt, dessen Gurtband im nicht angelegten Zustand in der Gebrauchsstellung der Lehne von einem Befestigungspunkt an der Karosserie über die Vorderseite und zumindest teilweise über die Oberseite der Lehne nach hinten verläuft, **dadurch gekennzeichnet, dass** das Gurtband (**5**) in der nach vorne umgeklappten Nichtgebrauchsstellung der Lehne (**3, 4**) ebenfalls über die Vorderseite (**7**) und zumindest teilweise über die Oberseite (**8**) der Lehne (**3, 4**) verläuft, und das Zurückklappen der Lehne (**3, 4**) aus der Nichtgebrauchsstellung in die Gebrauchsstellung durch eine hinter der Lehne (**3, 4**) angeordnete karosseriefeste Antriebseinheit (**13**) des Gurtbands (**5**) unterstützt wird oder automatisiert erfolgt.

2. Kraftfahrzeug nach Anspruch 1, **dadurch gekennzeichnet, dass** die Antriebseinheit ein angetriebener Aufrollautomat (**11**) des Sicherheitsgurtes (**5**) ist.

3. Kraftfahrzeug nach Anspruch 2, **dadurch gekennzeichnet, dass** der angetriebene Aufrollautomat (**11**) zugleich als aktiver Gurtbandstraffer dient.

4. Kraftfahrzeug nach einem der vorhergehenden Ansprüche, **dadurch gekennzeichnet, dass** das Gurtband (**5**) zwischen Antriebseinheit (**13**) und Oberseite (**8**) der Lehne (**3, 4**) über eine mit der Karosserie verbundene Umlenkrolle (**9**) geführt ist.

5. Kraftfahrzeug nach einem der vorhergehenden Ansprüche, **dadurch gekennzeichnet, dass** im oberen Bereich der Lehne (**3, 4**) eine Führung (**12**) angebracht ist, die das Gurtband (**5**) gegen ein seitliches Verlagern auf der Lehne (**3, 4**) sichert.

6. Kraftfahrzeug nach einem der vorhergehenden Ansprüche 1, 4 oder 5, **dadurch gekennzeichnet, dass** die Antriebseinheit (**13**) aus zwei angetriebenen Rollen besteht, zwischen denen das Gurtband (**5**) hindurchläuft.

7. Kraftfahrzeug nach Anspruch 6, **dadurch gekennzeichnet, dass** der Abstand der beiden Rollen (**13**) zueinander veränderbar ist, sodass das Gurtband (**5**) auch festgeklemmt werden kann.
